# EUROPÄISCHE PATENTSCHRIFT

(11) **EP 1 101 234 B1**
(45) Veröffentlichungstag und Bekanntmachung des Hinweises auf die Patenterteilung: **26.06.2002**
(21) Anmeldenummer: 99948654.1
(22) Anmeldetag: 19.07.1999
(51) Int. Cl.: H01H 73/00

(54) **EINRICHTUNG ZUM KURZSCHLUSSSCHUTZ**
DEVICE FOR SHORT-CIRCUIT PROTECTION
SYSTEME DE PROTECTION CONTRE LES COURT-CIRCUITS

(30) Priorität: 30.07.1998 DE 19834474
(43) Veröffentlichungstag der Anmeldung: 23.05.2001
(73) Patentinhaber: SIEMENS AKTIENGESELLSCHAFT, 80333 München (DE)
(72) Erfinder: POHL, Fritz, D-91334 Hemhofen (DE)
(86) Internationale Anmeldenummer: DE9902228
(87) Internationale Veröffentlichungsnummer: WO0007205

(56) Entgegenhaltungen:
- US-A- 5 689 397

## Beschreibung

Die Erfindung bezieht sich auf eine Einrichtung zum Kurzschlußschutz eines elektromechanischen Schützes, insbesondere für den Verschweißschutz der Kontakte des Schützes bei Kurzschlußbelastung, wobei ein Strombegrenzungsmechanismus gemäß dem Oberbegriff des Patentanspruchs 1 vorhanden ist.

Ein Strombegrenzungsmechanismus zur zumindest zeitweisen Führung des Stromes ist aus der DE 40 40 359 C2 und der DE 41 10 335 C2 bekannt. Weiterhin ist aus der EP 0 691 046 B1 (nächstliegender Stand der Technik) eine Anordnung zur Freischaltung von Abzweigen eines Niederspannungs-Leitungsnetzes im Kurzschlußfall bekannt, wobei im Abzweig Verbraucher an Phasenleiter und einen zugehörigen Nulleiter geschaltet sind, und dem/den Verbraucher/n ein Schaltelement zum Ein- und/oder Ausschalten vorgeschaltet ist und im Phasenleiter und/oder Nulleiter zusätzliche Schaltelemente zur Kurzschlußabschaltung vorgesehen sind, an die eine Überbrückungsschaltung mit Schalter angeschaltet ist, wobei nur im Phasenleiter ein einziger Leistungsschalter vorhanden ist. Dabei leitet die Überbrückungsschaltung auf der Lastseite des einzigen Leistungsschalters einen Teil des Kurzschlußstromes am Schalter vorbei, wobei in der Überbrückungsschaltung ein Überbrückungsstromzweig mit Widerstand vorhanden ist, dessen Widerstandswert zwischen 25 und 50 % des Wertes der kleinsten zu erwartenden Lastkreisimpedanz beträgt und über den der magnetisch angetriebene Schalter der Überbrückungsschaltung am Nulleiter angeschlossen ist. Eine solche Anordnung ist für spezifische Anforderungen des Kurzschlußschutzes ausgelegt.

Elektromechanische Schütze werden zum häufigen Schalten betriebsmäßiger Ströme eingesetzt. Da Schütz-Magnetantriebe mit einer zeitlichen Verzögerung von 10 bis 20 ms auf Einbzw. Ausschaltkommandos reagieren, eignen sich Schütze nicht, um mit ihnen rasch wirkende Schutzeinrichtungen, z.B. im Kurzschlußfall, zu realisieren. Zur Begrenzung schädlicher Auswirkungen von Kurzschlüssen werden daher Schütze mit einem Leistungsschalter oder mit Sicherungen elektrisch in Reihe geschaltet. Je nach ihrem Kurzschlußverhalten wird eine zugelassene Kombination Schütz + Leistungsschalter bzw. Schütz + Sicherung (nach IEC 947-4) in die Koordination Typ 1, 2 oder 3 eingeteilt.

Bei Koordination Typ 1 darf das Schütz nach einem Kurzschluß unbrauchbar sein, ohne daß eine Gefährdung davon ausgeht. Bei Koordination Typ 2 dürfen leichte, mit einem Schraubendreher aufbrechbare Kontaktverschweißungen vorliegen, so daß die Schaltfunktion mit geringem Aufwand wiederherstellbar ist. Bei Koordination Typ 3 darf keinerlei Funktionsbeeinträchtigung des Schützes vorliegen.

Ziel der Schaltgerätehersteller ist es, für Schützanwendungen die Koordination Typ 2 bzw. 3 zu realisieren. Hierfür werden besonders verschweißarme Kontaktwerkstoffe, beispielsweise z.B. AgSnO₂, ausgewählt und es wird durch die Abstimmung der Gerätekombination Schalter - Schütz bzw. Sicherung - Schütz der Durchlaßstrom im Kurzschlußfall auf ausreichend niedrige Werte begrenzt.

Letztere Maßnahme hat die unerwünschte Konsequenz, daß die Schütze nicht gemäß ihrer Nennstrom-Spezifikation eingesetzt werden können, sondern daß die Betriebsströme der Gerätekombination auf den halben, bzw. noch kleineren Wert des Schütz-Nennbetriebsstroms reduziert werden müssen.

Gerätekombinationen Schalter - Schütz mit der Koordination Typ 3 (keine Funktionseinschränkung) werden heute für kleinere Baugrößen (z.B. Iₙ = 32 A) als Komplettgerät (Herstellerbezeichnung Integral-Schütz) angeboten. Die Brückenkontakte des Schützes werden hierbei im Kurzschlußfall durch einen Magnetauslöser zwangsgeöffnet und gleichzeitig der Kurzschlußstrom durch einen starkstrombegrenzenden Schaltmechanismus auf unkritische Werte begrenzt.

Diese Methode ist jedoch auf Schütze mit höheren Nennströmen (100 - 400 A) nicht ohne weiteres übertragbar und würde zudem einen erheblichen Eingriff in die Grundkonstruktion des Schützes erfordern.

Aufgabe der Erfindung ist es, für Schütze heutiger Bauart, das heißt ohne konstruktive Maßnahmen, eine optimierte Strombegrenzungseinrichtung anzugeben. Insbesondere soll damit ein Betrieb in der oben angegebenen Koordination Typ 3 ohne Begrenzung des Nennbetriebsstromes ermöglicht werden.

Die Aufgabe ist erfindungsgemäß bei einer Einrichtung der eingangs genannten Art durch die Gesamtheit der Merkmale des Patentanspruches 1 gelöst. Vorteilhafte Weiterbildungen sind in den Unteransprüchen angegeben.

Bei der Erfindung erfolgt der Kurzschlußschutz durch einen solchen Strombegrenzungsmechanismus, der in einer ersten Stufe den Überbrückungskontakt eines Überbrückungsstromzweiges zur Stromentlastung des Schützes schließt und dessen Überbrückungsfunktion in einer zweiten Stufe vom Schaltlichtbogen übernommen wird, der im weiteren Verlauf des Abschaltvorgangs in eine Löschkammer einläuft und dabei den Kurzschlußstromkreis unterbricht.

Vorteilhafterweise wird der Überbrückungskontakt von dem den Bewegkontakt aufschlagenden Magnetauslöser an der Schlagstelle selbst gebildet. Die Magnetspule des Magnetauslösers wird bis zum Schließzeitpunkt des Überbrückungskontaktes vom Kurzschlußstrom durchflossen, womit Schließzeiten zwischen 1 und 2 ms realisierbar sind. Unmittelbar nach der Kontaktgabe durch den Überbrückungskontakt werden der Beweg- und der Festkontakt der Hauptstrombahn infolge des Öffnungsschlages getrennt und der Kurzschlußstrom kommutiert auf den Überbrückungsstromzweig mit einer entsprechenden Stromentlastung des Schützes und der Auslöserspule. Letzteres führt zum Abfall des Auslöser-Magnetankers, wodurch die Bogenkommutierung, falls nicht zuvor erfolgt, vom Überbrückungskontakt auf die Festkontaktleitschiene herbeigeführt wird.

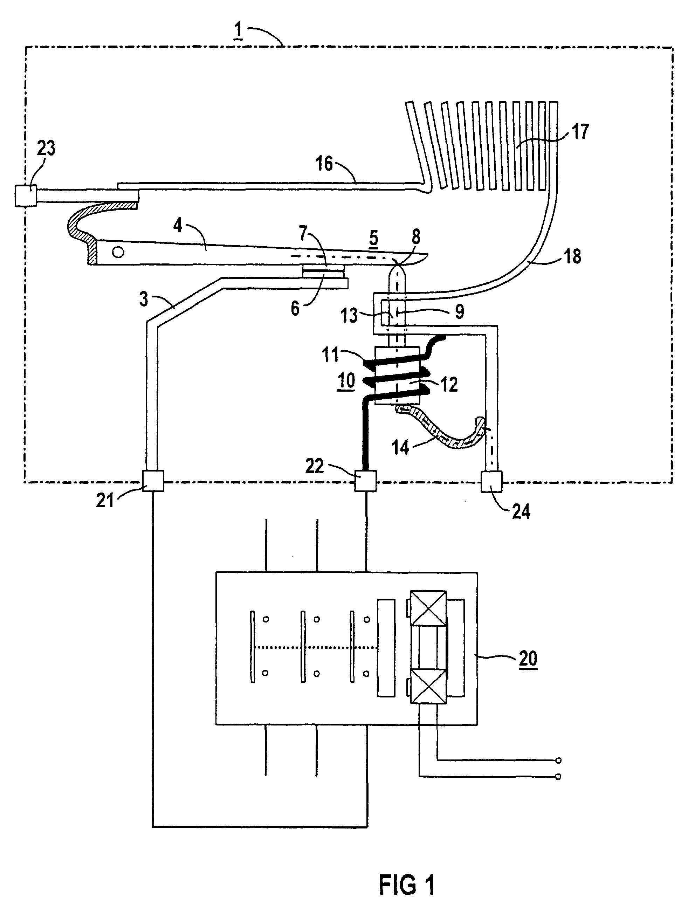

Weitere Einzelheiten und Vorteile der Erfindung ergeben sich aus der nachfolgenden Figurenbeschreibung eines Ausführungsbeispiels anhand der Zeichnung. Es zeigen
- Figur 1: schematisch die wesentlichen Merkmale der Kombination einer Strombegrenzungseinrichtung mit einem Schütz in einer ersten Funktionsphase und
- Figur 2: den Strombegrenzungsmechanismus gemäß Figur 1 in einer zweiten Funktionsphase.

Typische Schalterkomponenten, wie beispielsweise Schaltschloß und Überstromauslöser, sind in den Figuren nicht im einzelnen dargestellt. Es wird vorausgesetzt, daß das Schütz mit verschweißarmen Kontaktwerkstoffen ausgerüstet ist, so daß die Schützkontakte einer gewissen Lichtbogenbelastung ausgesetzt sein dürfen, ohne zu verschweißen. Weiterhin soll außer vom Kurzschlußstrom oder von Federkraftspeichern herrührenden Kräften keine Fremdenergie, wie beispielsweise elektrische Hilfsenergie oder chemische Energie, zur Realisierung des Kurzschlußschutzes genutzt werden.

Eine Strombegrenzungseinrichtung 1 für den Verschweißschutz besteht aus der Kombination eines strombegrenzenden Schalters mit Überbrückungsmechanismus und eines Schützes 20 mit Magnetantrieb. Der Überbrückungsmechanismus enthält einen ersten Überbrückungsstromzweig 9 mit Überbrückungskontakt 8, welcher von einem Magnetauslöser 10 eingeschaltet wird, und einen zweiten Überbrückungsstromzweig 19, welcher vom Schaltlichtbogen 25 eingeschaltet wird. Beide Überbrückungsarten, d.h. mittels Kontakt oder mittels Schaltlichtbogen, sind vom Stand der Technik vorbekannt und realisieren in dieser speziell angegebenen Kombination die neue Einrichtung zum Kurzschlußschutz. Dies kommt insbesondere dadurch zum Ausdruck, daß der Magnetauslöser in der Folge seiner Überbrückungsfunktion beim Wiederöffnen des Überbrückungskontaktes den Schaltlichtbogen erzeugt, welcher die Überbrückung aufrecht erhält, bis der Lichtbogen gelöscht ist.

Der Strombegrenzungsmechanismus 1 beinhaltet in bekannter Weise eine Kontaktanordnung 5 aus Festkontakt 6 und Bewegkontakt 7. Beide Kontakte sind jeweils auf entsprechende Kontaktträger 3 bzw. 4 aufgebracht.

Der Kontaktträger 4 für den Bewegkontakt 7 ist so ausgebildet, daß er über die eigentliche Kontaktanordnung 5 hinaussteht und somit einen Teil eines Überbrückungskontaktes 8 realisiert. Es ist ein Magnetauslöser 10 mit Spule 11, Anker 12, Schlagstift 13 und flexibler Litze 14 vorhanden, der den anderen Teil des Überbrückungskontaktes 8 bildet und auf den beweglichen Kontaktträger 4 einwirkt. Weiterhin ist der Bewegkontakt 7 mit einer Bewegkontakt-Laufschiene 16 und einer Löschkammer 17, bestehend aus einer Vielzahl von Löschblechen, verbunden, die ihrerseits wiederum über eine Festkontakt-Laufschiene 18 mit dem Überbrückungskontakt kontaktiert ist.

Als Überbrückungskontakt 8 wird hier also das Kontaktpaar verstanden, das aus einem Endteil des Kontaktträgers 4 und aus dem Schlagstift 13 gebildet wird. Schlagstift 13 und Anker 12 des Magnetauslösers 10 können zur Verbesserung der elektrischen Leitfähigkeit einen Kupferkern enthalten.

Der als strombegrenzender Schalter dargestellte Strombegrenzungsmechanismus 1 besitzt zu jeder Hauptstrombahn vier Hauptstromanschlüsse 21 bis 24. Zwei dieser Hauptstromanschlüsse, d.h. die Anschlüsse 23 und 24, dienen dem üblichen Schaltgeräteanschluß an das elektrische Netz, d.h. je ein Stromanschluß pro Hauptstrombahn befindet sich an der Einspeiseseite und an der Lastseite des Schaltgerätes.

An den beiden anderen Hauptstromanschlüssen 21 und 22 wird die zugeordnete Hauptstrombahn des Schützes 20 angeschlossen. Der Strompfad einer Hauptstrombahn führt also von der Einspeiseseite durch einen Teil des strombegrenzenden Schaltgerätes zum Schütz 20, und von diesem weiter durch den restlichen Teil des Schaltgerätes 1 zur Lastseite. Mit seiner Schaltfunktion schaltet das Schütz 20 im Normalbetrieb die gesamte Hauptstrombahn ein oder aus.

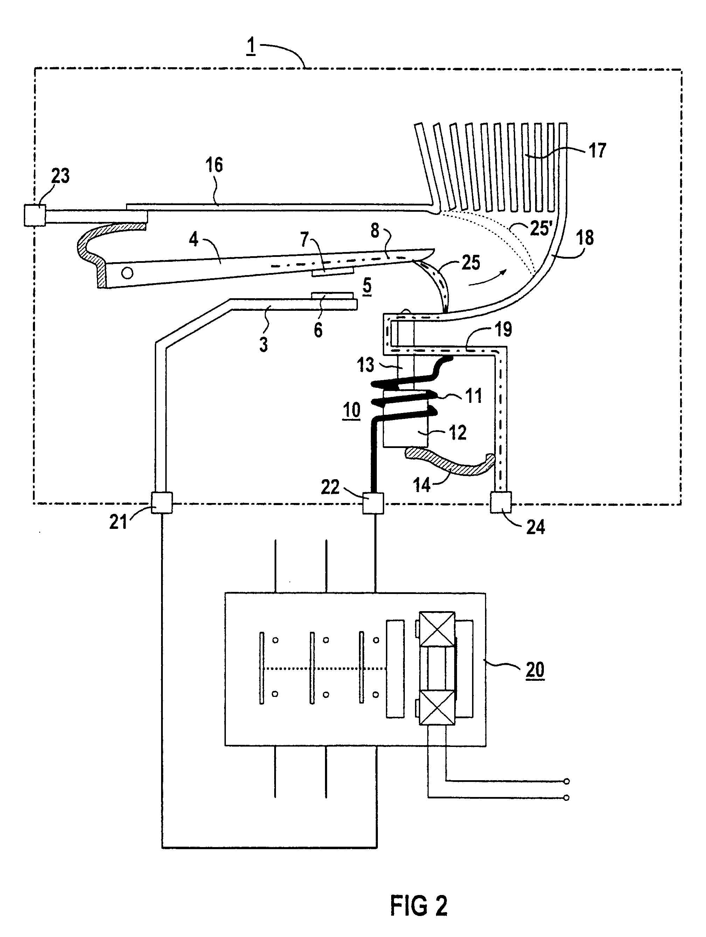

Wird der strombegrenzende Schalter 1 im Normalbetrieb ausgeschaltet, z.B. zu Wartungszwecken am Schütz oder im Lastkreis, so kommutiert der Schaltlichtbogen 25 gemäß Figur 2 von den geöffneten Kontakten 6, 7 auf die zugeordneten Laufschienen 16, 18 und unterbricht mit dem Einlaufen in die Löschblechkammer 17 in herkömmlicher Weise den Stromkreis zwischen der Einspeiseseite mit Bewegkontakt 7 und der Lastseite. Die Lastseite und auch das Schütz 20 sind danach von der Einspeiseseite elektrisch getrennt.

Im Überstrom- und Kurzschlußfall ist die magnetische Erregung des Auslösers 10 durch den elektrischen Strom so groß, daß eine unverzögerte Auslösung des üblicherweise vorhandenen, aber nicht dargestellten Schaltschlosses und das Schließen des Überbrückungskontaktes 8 erfolgen. Der nun gebildete Überbrückungsstrompfad führt über den Arm 4 des Bewegkontaktes 7, den Überbrückungskontakt 8 mit Magnetanker und eine flexible Anschlußleitung 14 zum Lastanschluß 24 des Schützes 20. Da dieser Strompfad nur kurzzeitig, d.h. im ms-Bereich, elektrischen Strom tragen darf und im Normalbetrieb stromlos sein muß, kann der flexible Stromleiter beispielsweise durch einen nicht dargestellten Bimetallauslöser, welcher im Störfall das Schaltschloß betätigt, überwacht werden. Alternative, nicht elektronische Überwachungsorgane sind Stromwandler-Haltemagnetauslöser, Schnappscheiben, usw.

Da bei der Überbrückung der Hauptstrombahn mit den Anschlüssen 21 und 22 außer dem Schütz 20 auch die Spule 11 des Magnetauslösers 10 stromlos geschaltet wird, fällt der Anker 12 mit Schlagstift 13 in seine Ruhelage zurück und der Überbrückungskontakt 8 öffnet. Der zwischen dem sich öffnenden Überbrückungskontakt 8, d.h. zwischen Bewegkontaktträger 4 und Schlagstift 12, entstehende Lichtbogen 25 kommutiert, durch das magnetische Blasfeld des Bewegkontaktes 7 angetrieben, als Lichtbogen 25' auf die Festkontaktleitschiene 18 und wandert sich verlängernd mit einhergehendem Bogenspannungsanstieg in die Löschblechkammer 17.

Die Teilinduktivität der Hauptstrombahn, welche vom Festkontakt 6 über das Schütz 20 und die Magnetspule 11 zum Lastanschluß führt, bewirkt, daß der elektrische Strom in der Schütz-Hauptstrombahn bei der Kontaktgabe des Überbrückungskontaktes 8 nicht abrupt abklingt, sondern hierfür ein gewisses Zeitintervall (t_{B} < 1 ms) benötigt wird. Dabei verlagert sich der zwischen der geöffneten Kontaktanordnung 5 mit Festkontakt 6 und Bewegkontakt 7 des Strombegrenzungsmechanismus 1 entstandene Lichtbogen 25 unter der magnetischen Blaswirkung der Stromschleife aus Bewegkontakt, Lichtbogen, Festkontakt auf den Spalt zwischen Festkontakt 6 und Festkontaktlaufschiene 18 und verlischt nach Abklingen des Stromes (mit ½ Li² ≈ ½ i*U_{B}*t_{B} und L≈2µH, i≈5kA, U_{B}≈20V folgt für die Bogendauer (= Abklingzeit) t_{B} ≈ 0,5 ms).

Bei der Funktionsbeschreibung der Strombegrenzung wurde auf Schalterkomponenten wie das Schaltschloß nicht im einzelnen ausgegangen: In erster Realisierung des strombegrenzenden Mechanismus 1 übernimmt der Magnetauslöser neben dem Einschalten des Überbrückungskontaktes und dem Öffnungsstoß auf den Bewegkontakt auch die mechanische Entklinkung des Schaltschlosses. Dieses ist in seinen Eigenschaften so auszulegen, daß nach dem Abfall des Magnetankers des Magnetauslösers das vollständige Öffnen bzw. Offenhalten des Bewegkontaktes durch den mechanischen Antrieb des Schaltschlosses erfolgt.

In alternativer Realisierung enthält die Strombegrenzungseinrichtung einen zweiten Magnetauslöser, der im Hauptstromkreis der Strombegrenzungseinrichtung angeordnet ist und von seinem Ansprechverhalten so eingestellt ist, daß dessen Öffnungsstoß auf den Bewegkontakt um etwa die Zeitspanne (≈ 0,5 bis 1 ms) später als der Öffnungsstoß des ersten Magnetauslösers mit Überbrückungskontakt erfolgt, die größer oder gleich der Einschaltdauer des Überbrückungskontaktes ist.

Die anhand der Figuren beschriebene elektromechanische Schutzeinrichtung nutzt also erprobte Schutzkonzepte der Kurzschlußstrombegrenzung in der Niederspannungsschalttechnik aus und ergänzt diese durch die erfindungsgemäße Schnellstüberbrückung mittels Magnetauslöser, welche funktional in eine Überbrückung mittels Schaltlichtbogen überleitet.

Der technische und kostenbezogene Zusatzaufwand ist minimal, so daß eine breite Anwendung der beschriebenen Schutzeinrichtung in Industrienetzen möglich ist.

## Patentansprüche

1. Einrichtung zum Kurzschlußschutz eines elektromechanischen Schützes, insbesondere für den Verschweißschutz der Kontakte des Schützes bei Kurzschlußbelastung, wobei ein mit dem Schütz in Reihe geschalteter Strombegrenzungsmechanismus vorhanden ist, der aus einer Kontaktanordnung mit einem Festkontakt und einem Bewegkontakt sowie einer diesen zugeordneten Löschkammer besteht, **dadurch gekennzeichnet, daß** der Strombegrenzungsmechanismus (1) in einem ersten Schritt einen Überbrückungskontakt (8) eines ersten Überbrückungsstromkreises (9) zur Stromentlastung des Schützes (20) schließt und daß dessen Überbrückungsfunktion in einem zweiten Schritt vom Schaltlichtbogen (25, 25') und einem zweiten Überbrückungsstromkreis (19) übernommen wird, indem im weiteren Verlauf des Abschaltvorganges der Schaltlichtbogen (25) vom Überbrückungskontakt (8) auf zugeordnete Laufschienen (16, 18) kommutiert und in die Löschkammer (17) des Strombegrenzungsmechanismus (1) einläuft, wodurch der Kurzschlußstromkreis unterbrochen wird.

2. Einrichtung nach Anspruch 1, **dadurch gekennzeichnet, daß** der Überbrückungskontakt (8) von einem den Bewegkontakt (7) aufschlagenden elektrisch leitenden Schlagstift (13) eines Magnetauslösers (10) und einem Abbrandstück des Bewegkontaktträgers (4) gebildet wird.

3. Einrichtung nach Anspruch 2, **dadurch gekennzeichnet, daß** das an zugeordnete Anschlußklemmem (21, 22) angeschlossene Schütz (20) den Überbrückungsstromkreisen (9,19) elektrisch parallel geschaltet ist.

4. Einrichtung nach Anspruch 3, **dadurch gekennzeichnet, daß** die Hauptkontakte (6,7) des Strombegrenzungsmechanismus (1) den Überbrückungsstromkreisen (9, 19) elektrisch parallel und dem an den zugeordneten Anschlußklemmen ,( 21, 22) angeschlossenen Schütz (20) elektrisch in Reihe geschaltet sind.

5. Einrichtung nach Anspruch 2, **dadurch gekennzeichnet, daß** die Magnetspule (11) des Magnetauslösers (10) bis zum Schließzeitpunkt des Überbrückungskontaktes (8) vom Kurzschlußstrom durchflossen wird.

6. Einrichtung nach Anspruch 5, **dadurch gekennzeichnet, daß** Schließzeiten zwischen 1 und 2 ms realisierbar sind.

7. Einrichtung nach einem der vorhergehenden Ansprüche, **dadurch gekennzeichnet, daß** nach der Kontaktgabe durch den Überbrückungskontakt (8) der Bewegkontakt (7) und der Festkontakt (6) der Hauptstrombahn des Strombegrenzungsmechanismus (1) getrennt wird und daß der Kurzschlußstrom auf den Überbrückungsstromzweig (9) kommutiert.

8. Einrichtung nach Anspruch 7, **dadurch gekennzeichnet, daß** nach Kommutierung des Kurzschlußstromes der Auslöser-Magnetanker (12) abfällt.

9. Einrichtung nach Anspruch 8, **dadurch gekennzeichnet, daß** die Bogenkommutierung vom Überbrückungskontakt (8) auf die Festkontaktleitschiene (18) herbeiführbar ist, wenn der Kurzschlußstrom vom ersten Überbrückungsstromzweig (9) auf den zweiten Überbrückungsstromzweig (19) kommutiert.

10. Einrichtung nach Anspruch 1, **dadurch gekennzeichnet, daß** der erste Überbrückungsstromzweig (9) des Überbrückungskontaktes (8) nur bei einer Kurzschlußabschaltung elektrischen Strom trägt.

11. Einrichtung nach Anspruch 1, **dadurch gekennzeichnet, daß** eine Stromüberwachungseinrichtung im ersten Überbrückungsstromzweig (9) die Strombegrenzungseinrichtung (1) auslöst, wenn ein elektrischer Strom mit vorgegebener Größe und Zeitdauer überschritten wird.

12. Einrichtung nach Anspruch 11, **dadurch gekennzeichnet, daß** die Stromüberwachungseinrichtung ein elektrothermischer Bimetallauslöser ist.

## Claims

1. Device for short-circuit protection of an electromechanical contactor, in particular in order to protect the contacts of the contactor from being welded by a short-circuit load, whereby a current-limiting mechanism connected in series with the contactor is present, comprising a contact configuration having a fixed contact, a movable contact, and an arcing chamber associated therewith, **characterised in that**, in a first stage, the current-limiting mechanism (1) closes a bridging contact (8) of a first bridging circuit (9) in order to reduce the current load on the contactor (20) and whose bridging function, in a second stage, is taken over by the switching arc (20, 25') and a second bridging circuit (19), whilst in the further course of the disconnection process the switching arc (25) commutates from the bridging contact (8) onto associated running rails (16, 18) and runs into the arcing chamber (17) of the current-limiting mechanism (1), whereby the short circuit is interrupted.

2. Device according to Claim 1, **characterised in that** the bridging contact (8) is formed from an electrically conductive striker pin (13) of a magnetic release (10) striking the movable contact (7) and a consumable element of the support (4) carrying said movable contact.

3. Device according to Claim 2, **characterised in that** the contactor (20) connected to associated connecting terminals (21, 22) is electrically connected in parallel to the bridging circuits (9, 19).

4. Device according to Claim 3, **characterised in that** the main contacts (6, 7) of the current-limiting mechanism (1) are electrically connected in parallel to the bridging circuits (9, 19), and electrically connected in series with the contactor (20) connected to the associated connecting terminals (21, 22).

5. Device according to Claim 2, **characterised in that** the short-circuit current flows through the magnetic coil (11) of the magnetic release (10) until the time at which the bridging contact (8) closes.

6. Device according to Claim 5, **characterised in that** closing times are defined between 1 and 2 ms.

7. Device according to one of the preceding claims, **characterised in that**, once contact has been made by the bridging contact (8), the movable contact (7) and the fixed contact (6) of the main current path of the current-limiting mechanism (1) are disconnected, and that the short-circuit current commutates onto the bridging current path (9).

8. Device according to Claim 7, **characterised in that** after commutation of the short-circuit current the release magnet armature (12) trips.

9. Device according to Claim 8, **characterised in that** the arc. commutates from the bridging contact (8) onto the fixed contact guide rail (18) when the short-circuit current commutates from the first bridging current path (9) onto the second bridging current path (19).

10. Device according to Claim 1, **characterised in that** the first bridging current path (9) of the bridging contact (8) carries electric current only during short-circuit disconnection.

11. Device according to Claim 1, **characterised in that** a current-monitoring device in the first bridging current path (9) trips the current-limiting device (1) if an electric current of a predetermined magnitude and time duration is exceeded.

12. Device according to Claim 11, **characterised in that** the current-monitoring device is an electro-thermal bimetallic release.

## Revendications

1. Dispositif pour la protection contre les courts-circuits d'un contacteur électromécanique, notamment pour la protection contre la soudure des contacts du contacteur lors d'une charge par court-circuit, dans lequel il existe un mécanisme de limitation de courant qui est branché en série avec le contacteur et qui est constitué d'un dispositif de contact avec un contact fixe et avec un contact mobile ainsi que d'une chambre d'extinction associée à ce dernier, **caractérisé par le fait que** le mécanisme de limitation de courant (1) ferme dans une première étape un contact de pontage (8) d'un premier circuit de courant de pontage (9), pour que le contacteur (20) soit déchargé du courant, et que sa fonction de pontage est reprise dans une deuxième étape par l'arc électrique de commutation (25, 25') et par un deuxième circuit de courant de pontage (19) de telle sorte que, dans la suite de l'opération de coupure, l'arc électrique de commutation (25) commute du contact de pontage (8) sur des rails (16, 18) associés et entre dans la chambre d'extinction (17) du mécanisme de limitation de courant (1), ce qui fait que le circuit de courant de court-circuit est interrompu.

2. Dispositif selon la revendication 1, **caractérisé par le fait que** le contact de pontage (8) est formé par une pointe (13), électriquement conductrice et agissant sur le contact mobile (7), d'un déclencheur magnétique (10) et par une pièce d'usure du support de contact mobile (4).

3. Dispositif selon la revendication 2, **caractérisé par le fait que** le contacteur (20) raccordé à des bornes de connexion associées (21, 22) est branché électriquement en parallèle avec les circuits de courant de pontage (9, 19).

4. Dispositif selon la revendication 3, **caractérisé par le fait que** les contacts principaux (6, 7) du mécanisme de limitation de courant (1) sont branchés électriquement en parallèle avec les circuits de courant de pontage (9, 19) et électriquement en série avec le contacteur (20) raccordé aux bornes de connexion associées (21, 22).

5. Dispositif selon la revendication 2, **caractérisé par le fait que** la bobine magnétique (11) du déclencheur magnétique (10) est parcourue par le courant de court-circuit jusqu'à l'instant de fermeture du contact de pontage (8).

6. Dispositif selon la revendication 5, **caractérisé par le fait que** des temps de fermeture entre 1 et 2 ms peuvent être réalisés.

7. Dispositif selon l'une des revendications précédentes, **caractérisé par le fait que**, après la mise en contact par le contact de pontage (8), le contact mobile (7) et le contact fixe (6) sont coupés du trajet de courant principal du mécanisme de limitation de courant (1) et que le courant de court-circuit commute sur la branche de courant de pontage (9).

8. Dispositif selon la revendication 7, **caractérisé par le fait que**, après la commutation du courant de court-circuit, la palette de déclencheur magnétique (12) tombe.

9. Dispositif selon la revendication 8, **caractérisé par le fait que** la commutation d'arc du contact de pontage (8) au rail de contact fixe (18) peut être provoquée lorsque le courant de court-circuit commute de la première branche de courant de pontage (9) à la deuxième branche de courant de pontage (19).

10. Dispositif selon la revendication 1, **caractérisé par le fait que** la première branche de courant de pontage (9) du contact de pontage (8) supporte un courant électrique seulement lors d'une coupure en cas de court-circuit.

11. Dispositif selon la revendication 1, **caractérisé par le fait qu'**un dispositif de surveillance de courant dans la première branche de courant de pontage (9) déclenche le dispositif de limitation de courant (1) lorsqu'un courant électrique de grandeur prédéterminée et de durée prédéterminée est dépassé..

12. Dispositif selon la revendication 11, **caractérisé par le fait que** le dispositif de surveillance de courant est un déclencheur bimétallique électrothermique.
